**Europäisches Patentamt**

**European Patent Office**

**Office européen des brevets**

(19)

(11) Veröffentlichungsnummer: **0 053 773**
**B1**

(12) # EUROPÄISCHE PATENTSCHRIFT

(45) Veröffentlichungstag der Patentschrift:
**19.02.86**

(21) Anmeldenummer: **81109979.5**

(22) Anmeldetag: **28.11.81**

(51) Int. Cl.⁴: **F 16 D 59/02**, F 16 D 55/228

(54) **Haltebremse.**

(30) Priorität: **06.12.80 DE 3046156**

(43) Veröffentlichungstag der Anmeldung:
**16.06.82 Patentblatt 82/24**

(45) Bekanntmachung des Hinweises auf die Patenterteilung:
**19.02.86 Patentblatt 86/8**

(84) Benannte Vertragsstaaten:
**AT CH DE FR GB IT LI SE**

(56) Entgegenhaltungen:
**DE - A - 2 510 193**
**DE - A - 2 510 760**
**DE - B - 1 273 278**
**FR - A - 1 422 956**
**US - A - 2 543 252**

(73) Patentinhaber: **KUKA Schweissanlagen & Roboter GmbH, Zugspitzstrasse 140, D-8900 Augsburg (DE)**

(72) Erfinder: **Zimmer, Ernst, Michael-Steinherr-Strasse 34, D-8904 Friedberg (DE)**

(74) Vertreter: **Ernicke, Hans-Dieter, Dipl.-Ing., Schwibbogenplatz 2b, D-8900 Augsburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine durch Druckmittel lüftbare Haltebremse mit den im Oberbegriff des Hauptanspruches aufgeführten Merkmalen.

Bei der diese Merkmale aufweisenden US-A-2,543,252 wird eine kegelstumpfförmig ausgebildete Bremsscheibe beidseitig von konisch ausgebildeten Bremsbacken beaufschlagt, von denen eine mit einer Federpaketanordnung beaufschlagt und die andere über Schrauben und Anschläge daran abgestützt ist. Zwischen den Bremsbacken befindet sich ein erheblicher Abstand, der mit einem flüssigen Druckmittel aus einer Hohlwelle mit einer radialen Bohrung beschickt wird. Die diese Druckkammer begrenzenden Bremsbacken sind gegenüber der Hohlwelle sowie einer dazu konzentrischen Hohlzylinderwand abgedichtet.

Bei einer solchen Haltebremse wird eine nicht unerhebliche Zeit zum Schliessen und Öffnen der Bremsbacken benötigt, weil die vom Krafterzeuger beaufschlagte eine Bremsbacke zufolge ihrer schwimmenden Anordnung das Gesamtspiel zwischen beiden Bremsbacken überwinden muss, um zu einem Reibschluss zu kommen.

Ähnlich verhält es sich bei einer Haltebremse nach der DE-A-25 10 760, bei der eine mit einem ortsfesten Gehäuse verbundene Bremsscheibe einseitig von einer mit einer Welle umlaufenden, ortsfesten Bremsbacke und anderseitig von einer auf der Welle längsverschieblich, aber drehstarr angeordneten Bremsbacke beaufschlagt wird. Eine zwischen den Bremsbacken befindliche, schmale, spaltförmige Druckkammer wird von einer radialen Bohrung in der Welle mit Druckmittel versorgt. Auch diese bekannte Bremse ist nicht für besonders kurze Schaltzeiten geeignet, weil die bewegliche Bremsbacke das gesamte Bremsspiel zu überwinden hat.

Die Aufgabe der Erfindung besteht hingegen darin, eine Haltebremse für ganz besonders kurze Schaltzeiten und ausserdem mit besonders geringen Schaltwegen zu entwickeln, um sie insbesondere für Manipulatoren oder dgl. einsatzfähig zu machen.

Die erfindungsgemässe Lösung dieser Aufgabe ergibt sich aus den kennzeichnenden Merkmalen des Hauptanspruches.

Mit diesen Merkmalen wird eine ganz besonders kurze Schaltzeit bei einem minimalen Schaltweg der einzelnen Bremsbacke erreicht, was die Haltebremse besonders für die genaue Ausführung der elektronisch programmierten Bewegungen bei einem Manipulator geeignet macht. Jede einzelne Bremsbacke ist aussenseitig von einer Krafterzeugeranordnung beaufschlagt und ausserdem über ein nur minimales Spiel von einer Gehäusewand distanziert. Damit ist sichergestellt, dass von aussen auf beide Bremsbacken einwirkende Kräfte nur einen ganz geringen Weg der Bremsbacken zu überwinden brauchen.

Zwischen den Bremsbacken ist ein minimales Spiel zur Bildung einer Druckkammer vorhanden, weshalb mindestens zwei Ventile für die Zuführung des Druckmittels in gleichmässig verteilter Anordnung vorgesehen sind, um die geringvolumige Druckkammer schlagartig und gleichmässig zu füllen.

Mit dieser gegenüber dem Stand der Technik wesentlich einfacheren Konzeption ist es gelungen, den Schaltweg der Bremsbacken auf jeweils ca. 0,15 mm zu reduzieren und damit die Schaltzeit zufolge gleichzeitigen Ablaufes der Bremsbackenbewegungen ganz wesentlich zu vermindern, wodurch eine bessere Genauigkeitsannäherung an vorgegebene Bewegungsstrecken erreicht wurde. Überraschenderweise konnte beim Einsatz der erfindungsgemässen Haltebremse auch eine erhebliche Reduzierung des Schalldruckpegels um mehr als 5 (db) A festgestellt werden.

Die erfindungsgemässe Haltebremse ist auch für einen bremsenden Einsatz während der Bewegung des Maschinenteils einsetzbar, beispielsweise im Falle einer Notbremssituation, wobei sie sich der Wirkung eines generatorisch bremsenden Antriebsmotors überlagern kann.

Es ist zwar durch die FR-A-14 22 956 bekannt, auf eine umlaufende Bremsscheibe zwei jeweils federbelastete Bremsbacken-Segmente peripher einwirken zu lassen. Das Lösen der Bremse erfolgt durch die Federn umgreifende Elektromagnete. Eine solche Haltebremse ist nicht in der Lage, grössere rotierende Massen in kürzester Zeit lagegenau zum Stillstand zu bringen, weil die geringflächigen Bremsbacken-Segmente nur eine Bremsung mit erheblichem Schlupf vollziehen können. Die bekannte Bremse scheidet damit für den Einsatz bei Manipulatoren aus.

Der Gegenstand der Erfindung ist hingegen nicht nur zum Einsatz bei Manipulatoren bestimmt, sondern kann auch bei anderen Getrieben eingesetzt werden, die Haltebremsen bedingen.

In den Unteransprüchen sind zahlreiche Ausgestaltungen und Ausführungsbeispiele der Erfindung offenbart.

Mit den Merkmalen der Ansprüche 1 und 8 lässt sich eine schnellere und gleichmässigere Lüftung der Haltebremse ohne Gefahr der Verkantung der Bremsbacken erreichen. Die Ventile können im Gehäuse oder aber auch in einer Bremsbacke angeordnet sein.

Die Ansprüche 2 und 3 zeigen Möglichkeiten auf, wie das schlagartige Halten der Bremsscheibe auf einfachste Weise erreicht werden kann.

In den Ansprüchen 4 bis 7 sind einige Varianten für die konstruktive Ausbildung der Bremsbacken mit der Zielsetzung aufgezeigt, die Druckkammer an günstigster Stelle anzuordnen und die axiale Beweglichkeit der Bremsbacken mit voller Abdichtung der Druckkammer in konstruktiv einfacher Weise sicherzustellen. Der Vorteil der Anordnung gemäss den Ansprüchen 9 bis 11 besteht darin, die drehschlüssige Abstützung der Bremsbacken so zu gestalten, dass keine in Umfangsrichtung wirksame Relativbewegung der abzubremsenden Teile eintreten kann.

Der Gegenstand des Anspruchs 12 bietet die Möglichkeit, die beim Einsatz der Haltebremse als Betriebsbremse während der Drehbewegung des abzubremsenden Teiles entstehende Reibungswärme leichter abführen zu können.

Einzelheiten der Erfindung sind in der Zeichnung schematisch und beispielsweise dargestellt. Es zeigen:

Fig. 1: Einen Teillängsschnitt durch eine Haltebremse,

Fig. 2 und 3: Teillängsschnitte durch Haltebremsen als Varianten zu Fig. 1

Fig. 4: einen Teillängsschnitt durch eine in Umfangsrichtung wirkende Abstützung von Bremsbacken,

Fig. 5: eine Seitenansicht der Haltebremse mit der Darstellung von Krafterzeugern und Abstützelementen und

Fig. 6: einen Teillängsschnitt durch eine weitere Variante einer Haltebremse zu Fig. 1.

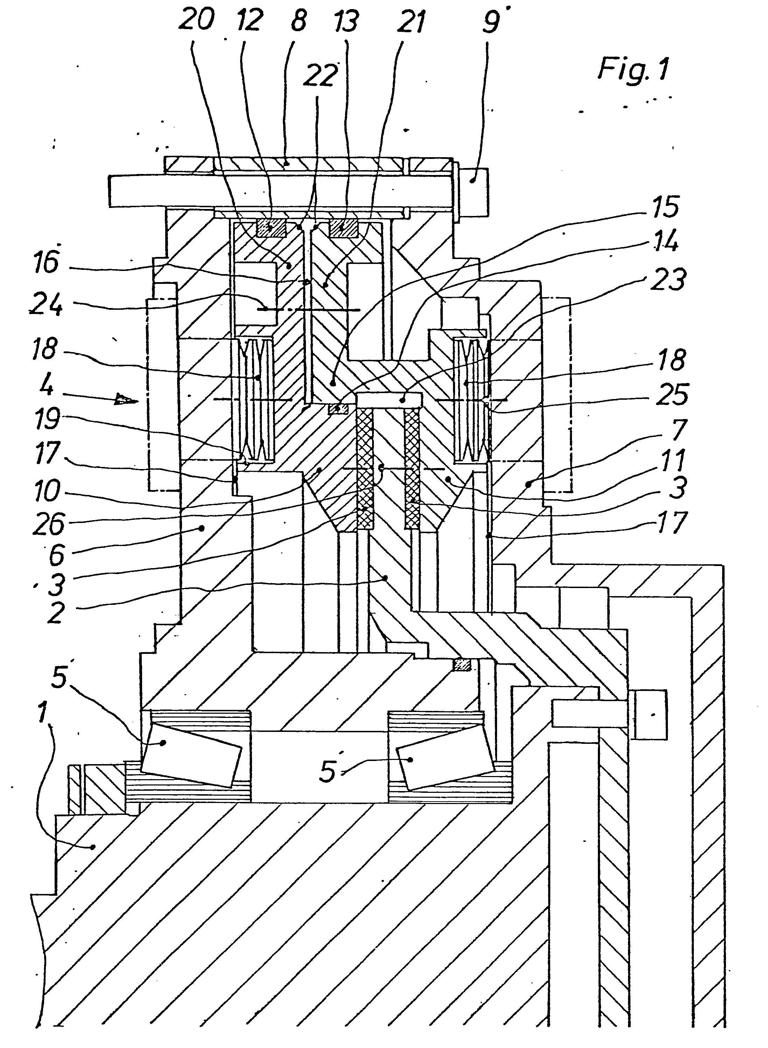

Mit 1 ist in Fig. 1 ein rotierendes Teil dargestellt, mit dem eine Bremsscheibe 2, die radial vorsteht, starr verbunden ist. Diese Bremsscheibe 2 trägt an ihren Wirkungsflächen verkehrsübliche Bremsbeläge 3. Der Steg der Bremsscheibe 2 ist unelastisch.

Das rotierende Teil 1 ist in einem die Bremsscheibe 2 mit Abstand umgreifenden Gehäuse 4 über geeignete Lager 5 gelagert. Das Gehäuse 4 weist zwei in bestimmtem Abstand zueinander distanzierte Stirnwände 6, 7 auf, die miteinander über einen Mantel 8 mittels Spannschrauben 9 so verbunden sind, dass die Distanz der Innenflächen der Stirnwände 6, 7 genau vorbestimmt ist.

Innerhalb des vom Gehäuse 4 gebildeten Hohlraumes sind zwei Bremsbacken 10, 11 axial beweglich geführt. Jede Bremsbacke 10, 11 ist gegenüber der Innenmantelfläche 8 des Gehäuses unter Einschluss passender Dichtungsmittel 12, 13 axial beweglich geführt. Ausserdem sind die Bremsbacken 10, 11 untereinander unter Einschluss des Dichtungsmittels 14 axial beweglich geführt.

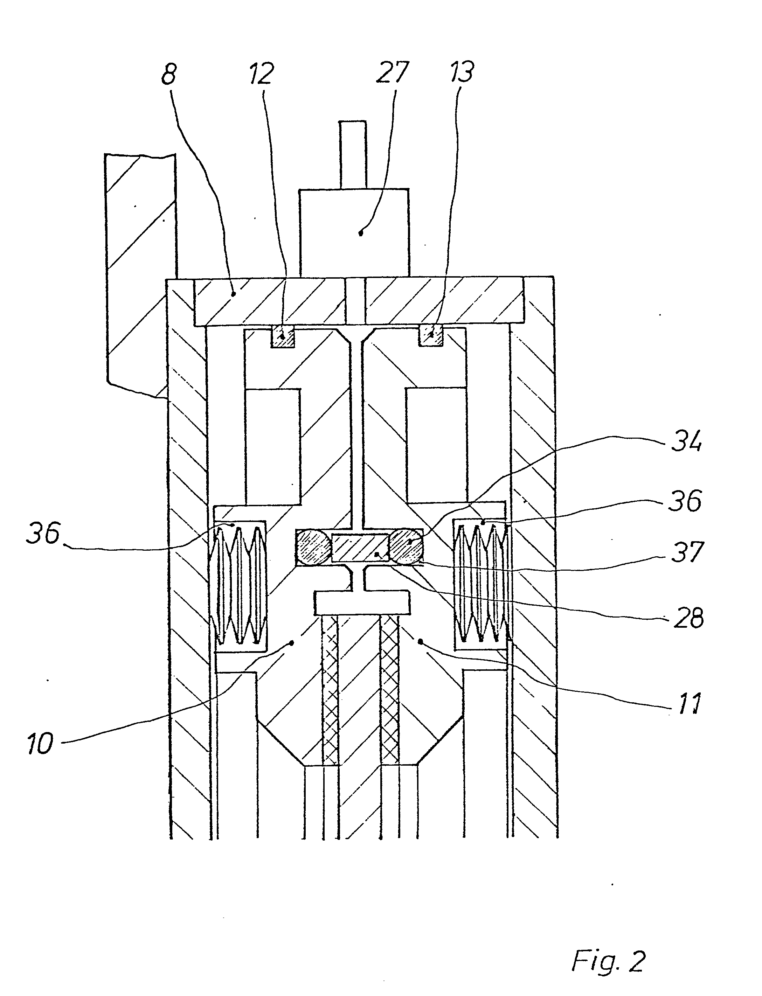

Beim Ausführungsbeispiel der Fig. 1 weist die Bremsbacke 11 eine die Bremsscheibe 2 aussenseitig umgreifende Nabe 15 auf, in deren Bohrung die andere Bremsbacke 10 mit dem Dichtungsmittel 14 axial beweglich geführt ist. Auf diese Weise ergibt sich zwischen den Dichtungsmitteln 12, 13, 14 eine Druckkammer 16, die dadurch gebildet ist, dass die Bremsbacken 10, 11 radial vorstehende Stege 20, 21 aufweisen. Diese Druckkammer 16 weist eine verhältnismässig geringe Breite auf. Sie ist mit in Fig. 2 dargestellten, am Gehäuse 4 angeordneten Ventilen 27 und Druckmittelleitungen in Verbindung, wobei es sich empfiehlt, die Randkanten der Stege 20, 21 mit Abschrägungen 22 zu versehen, um das Druckmedium schnell und gleichmässig am Umfang zu verteilen. Die Ventile 27 können im Bereich der Radialebene durch diese Druckkammer 16 angeordnet sein. Es ist aber auch möglich, die Ventile an eine der Bremsbacken 10, 11 anzuschliessen. Wenn durch diese Armaturen Druckluft in die Druckkammer 16 eingeführt wird, erfolgt dadurch eine Distanzierung der Bremsbacken 10, 11 welche dazu führt, dass die reibenden Elemente der Bremsbacken 10, 11 von den Reibbelägen 3 der Reibscheibe 2 freikommen. Diese Distanzierung der Bremsbacken 10, 11 kann aber nur soweit erfolgen, bis die Bremsbacken 10, 11 an den Stirnwänden 6, 7 des Gehäuses 4 zur Anlage kommen. Es ist hierzu ein geringes Spiel 17 zwischen diesen Stirnflächen der Bremsbacken 10, 11 und den Stirnwänden 6, 7 des Gehäuses 4 vorgesehen, das beispielsweise 0,15 mm betragen kann.

Andererseits sind die Bremsbacken 10, 11 gegenüber den Stirnwänden 6, 7 des Gehäuses 4 durch Federpakete 18 abgestützt, die in passenden Kammern 19 der Bremsbacken 10, 11 angeordnet sind. Diese Federpakete 18 sind so dimensioniert, dass sie die erforderliche Brems- und Haltekraft der Bremsbacken 10, 11 an der Bremsscheibe 2, 3 erzeugen können. Bei entlüfteter Druckkammer 16 stellt sich folglich zwischen den Bremsbacken 10, 11 und den Stirnwänden 6, 7 das Spiel 17 ein. Wird die Druckkammer 16 mit einem Druckmedium, z.B. Pressluft, beschickt, dann führt dies lediglich dazu, dass die Bremsbacken 10, 11 gegen die Stirnwände 6, 7 des Gehäuses 4 spontan gedrückt werden, wodurch aber sofort die Reibung der Bremsbacken 10, 11 an der Bremsscheibe 2, 3 unterbunden wird.

Es hat sich gezeigt, dass über diesen sehr geringen Schaltweg der Bremsbacken 10, 11 eine erhebliche Minderung des Geräuschpegels während der Einschaltzeit der Haltebremse erreicht werden kann. Zugleich konnten die Schaltzeit und damit die Genauigkeiten der erfindungsgemässen Haltebremse wesentlich verkürzt bzw. verbessert werden.

Damit die miteinander zu beweglichen Teile während des Schaltvorganges keine unvorhergesehenen Deformationen erleiden, empfiehlt es sich, die schwerpunktmässigen Wirkungslinien 24, 25, 26 untereinander abzustimmen. Mit 24 ist die Wirkungslinie der Druckkammer 16 dargestellt. Entlang dieser kreisförmigen Linie erfolgt die Auseinanderspreizung der Bremsbacken 10, 11 durch Füllung der Druckkammer 16. Mit 26 ist die Wirkungslinie dargestellt, die bei Bremsreibung der Bremsbacken 10, 11 an den Bremsbelägen 3 der Bremsscheibe 2 anzunehmen ist. Zwischen beiden Wirkungslinien 24, 26 soll die Wirkungslinie 25 der Federpakete 18 liegen, um dadurch einem Verwinden der Bremsbacken 10, 11 bei gleichzeitig geringem Querschnitt und kleiner Masse dieser Bremsbacken entgegenzuwirken. Die Erfindung strebt folglich auch an, durch materialsparende Konstruktion die Gefahr der Beeinträchtigung der erfindungsgemässen Wirkung durch ungewollte Deformationen zu beseitigen.

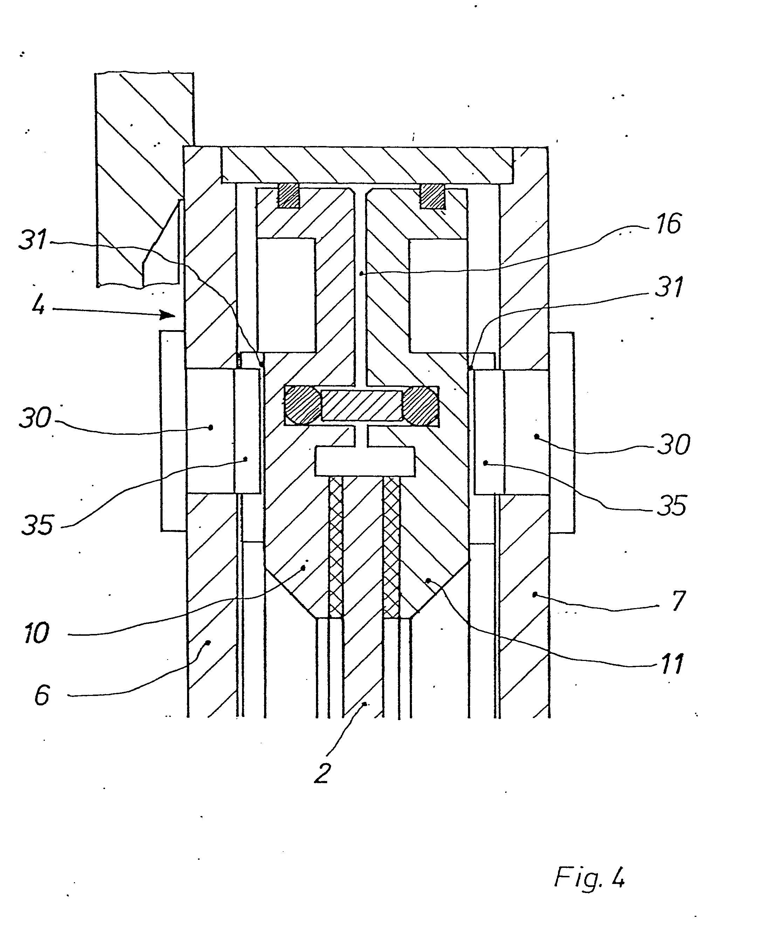

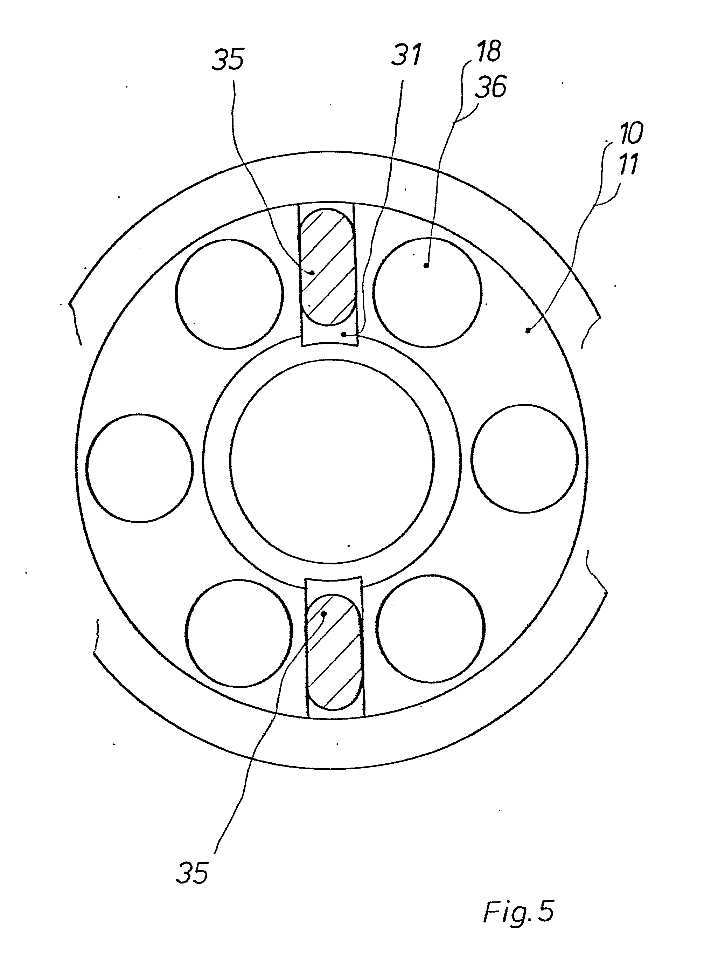

Die Bremsbacken 10, 11 müssen, um die gewünschte Wirkung zu erzielen, in Umfangsrichtung so abgestützt, also drehstarr ausgebildet sein, dass bei plötzlichem Angreifen der Bremsbacken 10, 11 an den Belägen 3 der Bremsscheibe 2 keine tangentiale (relative) Ausweichbewegung stattfinden kann. Im Beispiel der Fig. 4 ist gezeigt, dass sowohl in den Stirnwänden 6, 7 des Gehäuses 4 als auch in den benachbarten Teilen der Bremsbacken 10, 11 und zwar in den Bereichen zwischen den Federpaketen 18 (vgl. auch Fig. 5) radial sich erstreckende Nuten 31 vorgesehen sind, in denen Passelemente 30 so angeordnet sind, dass sie die axiale Bewegung der Bremsbacken 10, 11 führend zulassen, aber eine drehende Bewegung praktisch ohne Spiel (Passungsspiel ausgeschlossen) vermeiden.

Dieses Problem wird beim Ausführungsbeispiel der Fig. 4 so gelöst, dass die in den Seitenwänden 6, 7 befindliche Nut 31 als Durchbruch gebildet ist, durch den das Passelement 30 von aussen her eingesetzt ist, wobei das Passelement 30 mit der Stirnwand 6, 7 verschraubt ist. Mit einem Ansatz 35 greift das Passelement 30 auch in die Nut 31 der einzelnen Bremsbacke 10, 11 ein, wo die Passung als axial wirkende Führung mit möglichst wenig Spiel auszubilden ist.

Es genügt, diese Nuten 31 und Passelemente 30 an einander gegenüberliegenden Seiten vorzusehen. Jedenfalls sollte aber ein Gleichgewicht der Wirkungen der Federpakete 18 mit denjenigen der Passelemente 30 herbeigeführt werden.

In den Ausführungsbeispielen der Fig. 2 bis 4 sind ausserdem von Fig. 1 abweichende Formgebungen der Bremsbacken 10, 11 aufgezeigt, woraus ersichtlich ist, dass die Erfindung mannigfaltig ausgestaltet werden kann.

Beim Beispiel der Fig. 2 sind die Bremsbacken 10, 11 spiegelbildlich zueinander ausgestaltet und am Gehäusemantel 8 axial beweglich geführt sowie bei 12, 13 abgedichtet. Mit den Kammern 36 ist die Lage der Krafterzeuger 18 (Fig. 1), die auch Permanentmagnete sein können, symbolisch angedeutet. Die Bremsbacken 10, 11 sind aber nicht unmittelbar aneinander sondern über eine Hülse 28 miteinander geführt, die in passende Ringnuten 37 der Bremsbacken 10, 11 eingreift. Beidseits der Hülse 28 sind Dichtungsmittel 34 in die Ringnut 37 eingelegt, die beim Schliessen der Bremsbacken 10, 11 auf Druck belastet sind. Der Vorteil dieser Massnahme besteht in der kostengünstigen Herstellung der gleichdimensionierten Bremsbacken 10, 11.

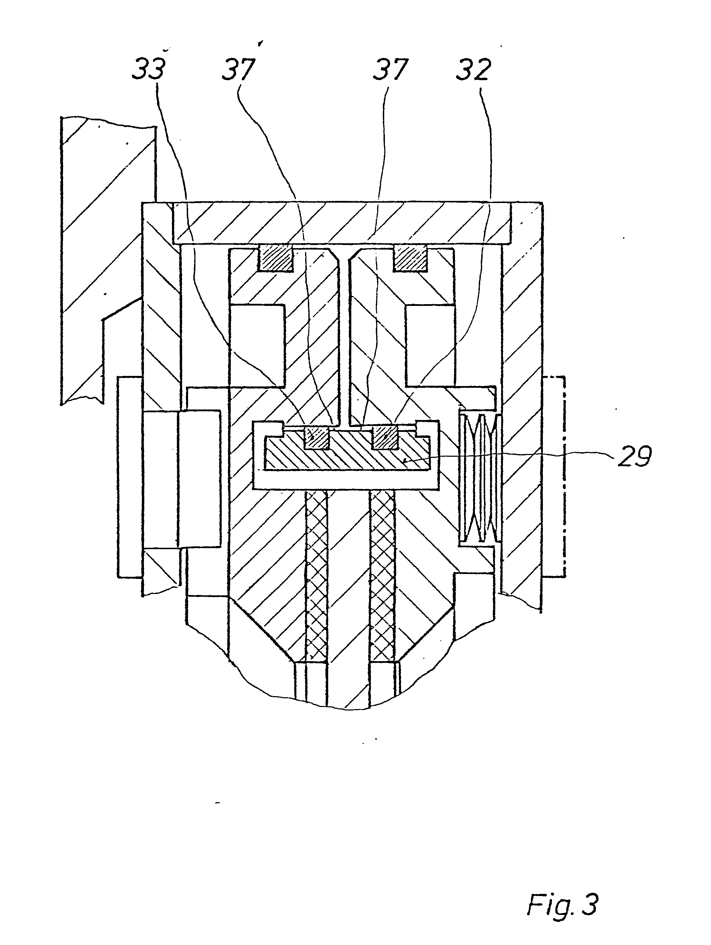

Das ähnliche Beispiel der Fig. 3 weist eine ebenfalls in Nuten 37 geführte Hülse 29 auf, deren Dichtungskörper 32, 33 ähnlich wie bei Fig. 1 angeordnet und daher nicht auf Druck belastet sind.

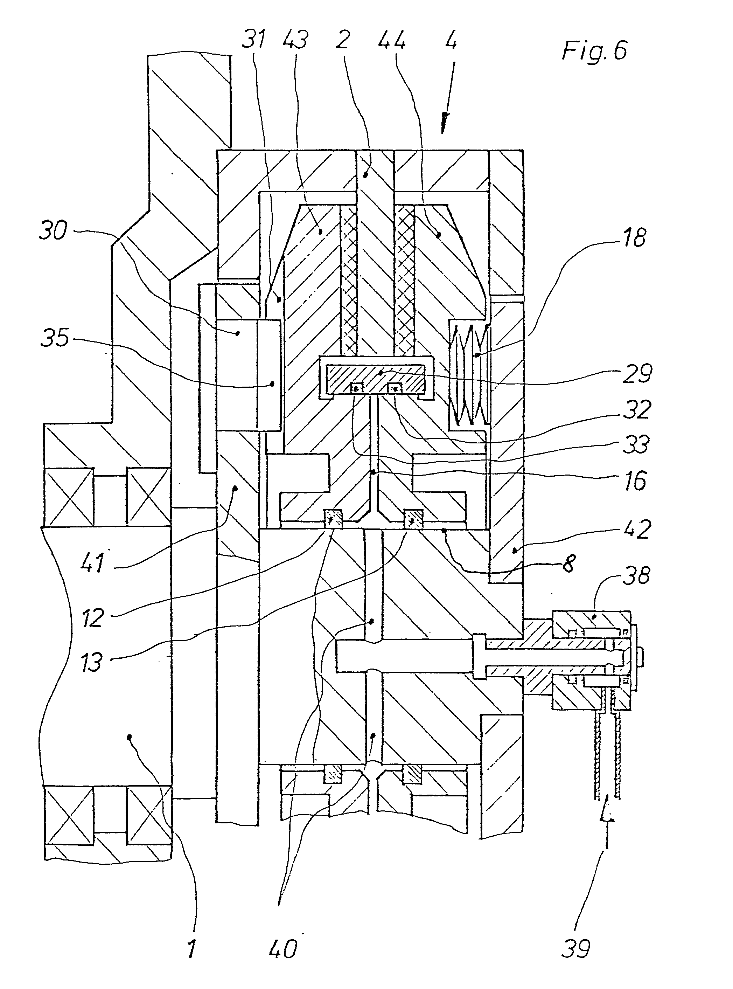

Im Beispiel der Fig. 6 ist dargestellt, dass die Bremsscheibe 2 auch radial ausserhalb der Druckkammer 16 vorgesehen, beispielsweise mit dem Gehäuse 4 ortsfest verbunden sein kann.

Ähnlich Fig. 3 ist die Druckkammer 16 jetzt nach aussen dichtend durch Hülse 29 bzw. Dichtungskörper 32, 33 und nach innen dichtend durch Dichtungsmittel 12, 13 abgeschlossen.

Ähnlich Fig. 4 sind (nur im linken Halbschnitt gezeigt) die Bremsbacken 43, 44 jetzt über Passelemente 30 mit Ansatz 35 in Nut 31 eingreifend drehschlüssig aber axial verschiebbar über Stirnwände 41, 42 mit dem sich drehenden Maschinenteil 1 verbunden.

Die Krafterzeuger 18 (z.B. Federpakete), die in ihrer Anordnung, Ausführung und Wirkung derjenigen in Fig. 1 bzw. 2 sehr ähnlich sind, zeigt der rechte Halbschnitt.

Der Anschluss des Druckmediums erfolgt koaxial durch das sich drehende Maschinenteil 1 über Anschluss 39, verkehrsüblichem Drehanschluss 38, einer koaxialen Bohrung und den mindestens zwei Verteilerbohrungen 40.

Die Anordnung nach Fig. 6 ist besonders für hydraulische Druckmedien geeignet.

**Patentansprüche**

1. Durch Druckmittel lüftbare Haltebremse für um eine Achse rotierende Getriebe- bzw. Maschinenteile (1), insbesondere bei Manipulatoren, bestehend aus einer Rotationsachse konzentrisch sowie zwischen zwei ebenfalls konzentrischen Bremsbacken (10, 11; 43, 44) angeordneten Bremsscheibe (2), von welchen Teilen (2 bzw. 10, 11; 43, 44) eines rotiert und das andere drehfest mit einem ortsfesten Gehäuse (4) verbunden ist, wobei beide Bremsbacken entweder an dem rotierenden Teil (1) oder dem ortsfesten Gehäuse (4) drehschlüssig, jedoch gegenüber der Bremsscheibe (2) axial verschiebbar abgestützt sind, und wobei einerseits eine die Bremsbacken mit der Bremsscheibe in Reibschluss haltende, ständig wirksame Krafterzeugeranordnung (18) und andererseits zwischen den die Bremsscheibe umgreifenden Bremsbacken eine in axialer Richtung schmale, in radialer Richtung über mindestens eine Druckmittelzuführungsbohrung (40) beschickbare Druckkammer (16) zur Aufnahme des für das Lüften der Bremsbacken erforderlichen Druckmediums vorgesehen ist, welche Druckkammer (16) durch radiale Stege (20, 21) der Bremsbacken gebildet ist, das gegenüber einer zur Rotationsachse konzentrischen Wandung (8) abgedichtet geführt sind, dadurch gekennzeichnet, dass

a) beide Bremsbacken (10, 11; 43, 44) mit einem den Schaltweg bestimmenden minimalen Spiel (17) an sie aussenseitig axial begrenzenden Stirnwänden (6, 7; 41, 42) drehschlüssig abgestützt sind,

b) zwischen jeder Stirnwand (6, 7; 41, 42) und der zugehörigen Bremsbacke (10, 11; 43, 44) eine letztere beaufschlagende Krafterzeugeranordnung (18) angeordnet ist,

c) die Druckkammer (16) über mindestens zwei über den Umfang gleichmässig verteilte Druckmittelzuführungsbohrungen (40) an Ventile (27) angeschlossen ist.

2. Haltebremse nach Anspruch 1, dadurch gekennzeichnet, dass als Krafterzeuger (18) gleichmässig verteilt angeordnete, sich an den Stirnwänden (6, 7, 41, 42) des Gehäuses (4) abstützende Federpakete vorgesehen sind.

3. Haltebremse nach Anspruch 1, dadurch gekennzeichnet, dass als Krafterzeuger (18) konzentrisch auf die Bremsbacken einwirkende Permanentmagnete vorgesehen sind.

4. Haltebremse nach Anspruch 1 oder einem der folgenden, dadurch gekennzeichnet, dass die Druckkammer (16) zwischen radial über die Bremsscheibe (2) nach aussen hinausragenden Stegen (20, 21) der Bremsbacken (10, 11) gebildet ist.

5. Haltebremse nach Anspruch 4, dadurch gekennzeichnet, dass die axiale Kraftwirkungslinie (25) der Krafterzeuger (18) etwa in der Mitte zwischen den (Schwerpunkt)-Kraftwirkungslinien (24, 26) der Druckkammer (16) und den Bremselementen (3) von Bremsscheibe (2) und Bremsbacken (10, 11) liegt.

6. Haltebremse nach Anspruch 1 oder folgenden, dadurch gekennzeichnet, dass eine Bremsbacke (11) mit einer Nabe (15) die Bremsscheibe (2) umgreift und an der Nabe (15) die andere Bremsbacke (10) dichtend (14) axial geführt ist.

7. Haltebremse nach einem der Ansprüche 1 bis 5, dadurch gekennzeichnet, dass beide Bremsbacken (10, 11) die Bremsscheibe (2) teilweise umgreifen und an einer zylinderförmigen, die Bremsscheibe mit Abstand umgreifenden Hülse (28, 29) dichtend (34; 32, 33) axial geführt sind.

8. Haltebremse nach Anspruch 1 oder folgenden, dadurch gekennzeichnet, dass die die Druckkammer (16) am peripheren Randbereich begrenzenden Teile (20, 21) der Bremsbacken (10, 11) abgeschrägt (22) bzw. abgerundet sind.

9. Haltebremse nach Anspruch 1 oder folgenden, dadurch gekennzeichnet, dass in den einander zugekehrten Stirnseiten der Bremsbacken (10, 11, 43, 44) und Gehäusestirnwänden (6, 7, 41, 42) radial sich erstreckende Nuten (31) sowie diese durchdringende Passelemente (30) angeordnet sind, die gegenüber jeweils einer Nut (31) eine Gleitpassung aufweisen.

10. Haltebremse nach Anspruch 9, dadurch gekennzeichnet, dass das einzelne Passelement (30) von der Aussenseite der Gehäusestirnwand (6, 7, 41, 42) her durch diese Wand hindurchgeführt ist, in die Nut (31) der Bremsbacke (10, 11, 43, 44) eingreift und mit der Wand (6, 7, 41, 42) fest verbunden ist.

11. Haltebremse nach Anspruch 9 oder 10, dadurch gekennzeichnet, dass die Passelemente (30) in den Bereichen zwischen den Krafterzeugern (18) angeordnet sind.

12. Haltebremse nach einem der Ansprüche 6 oder 8 bis 11, dadurch gekennzeichnet, dass zwischen dem Umfang der Bremsscheibe (2) und der Nabe (15) ein ringförmig umlaufender Hohlraum (23) angeordnet ist.

**Claims**

1. Blocking brake which can be ventilated by pressure means for gear or machine parts (1) which rotate about an axis, in particular in the case of manipulators, comprising a brake disc (2) which is arranged concentrically to the axis of rotation and between two likewise concentric brake shoes (10, 11; 43, 44), of which parts (2 or 10, 11; 43, 44) one rotates and the other is connected to a fixed housing (4) so as to be rotationally rigid, both brake shoes being supported either on the rotating part (1) or on the fixed housing (4) in a rotationally locked manner, but in an axially displaceable manner relative to the brake disc (2), and on the one hand a continuously operative force generating arrangement (18) is provided which holds the brake shoes friction-tight with the brake disc, and on the other hand a pressure chamber (16), which is narrow in a radial direction and which can be filled in a radial direction via at least one pressure means delivery borehole (40), is provided between the brake shoes which surround the brake disc for receiving the pressure medium which is required for ventilating the brake shoes, which pressure chamber (16) is formed by radial webs (20, 21) of the brake shoes, which are guided relative to a wall (8) which is concentric to the axis of rotation so as to be sealed, characterised in that:

a. both brake shoes (10, 11; 43, 44) are supported in a rotationally locked manner with minimum clearance (17) determining the feed path on end faces (6, 7; 41, 42) which limit the said brake shoes axially on the outside,

b. a force generating arrangement (18) which is arranged between each end face (6, 7; 41, 42) and the associated brake shoe (10, 11; 43, 44) acts upon the latter,

c. the pressure chamber (16) communicates with valves (27) via at least two pressure means delivery boreholes (40) which are distributed evenly across the circumference.

2. Blocking brake according to claim 1, characterised in that as a force generator (18) sets of springs are provided which are supported on the end faces (6, 7; 41, 42) of the housing (4) and which are arranged so as to be evenly distributed.

3. Blocking brake according to claim 1, characterised in that as a force generator (18) permanent magnets are provided which act concentrically upon the brake shoes.

4. Blocking brake according to claim 1 or any one of the following claims, characterised in that the pressure chamber (16) is formed between webs (20, 21) of the brake shoes (10, 11) which project radially across the brake disc (2) outwards.

5. Blocking brake according to claim 4, characterised in that the axial action of force line (25) of the force generators (18) is arranged approximately in the centre between the (centre of gravity) — action of force lines (24, 26) of the pressure chamber (16) and brake elements (3) of the brake disc (2) and brake shoes (10, 11).

6. Blocking brake according to claim 1 or the following claims, characterised in that a brake shoe (11), with a hub (15), surrounds the brake disc (2) and the other brake shoe is guided axially in a sealed manner (4) on the hub (15).

7. Blocking brake according to any one of claims 1 to 5, characterised in that both brake shoes (10, 11) partially surround the brake disc (2) and are guided axially on a cylindrical shell (28, 29) which surrounds the brake disc with a clearance, in a sealed manner (34; 32, 33).

8. Blocking brake according to claim 1 or the following claims, characterised in that the parts (20, 21) of the brake shoes (10, 11) which define the pressure chamber (16) on the peripheral edge region are oblique (22) or rounded off.

9. Blocking brake according to claim 1 or the following claims, characterised in that in the end faces of the brake shoes (10, 11, 43, 44) and housing end walls (6, 7, 41, 42) which turn towards one another, grooves (31) which extend radially and fitting elements (30) which penetrate these and which have a sliding fit relative to a groove in each case are arranged.

10. Blocking brake according to claim 9, characterised in that an individual fitting elements (30) is guided from the outside of the housing end face (6, 7, 41, 42) through this wall, engages in the groove (31) of the brake shoe (10, 11, 43, 44) and is connected rigidly to the wall (6, 7, 41, 42).

11. Blocking brake according to claim 9 or 10, characterised in that the fitting elements (30) are arranged in the regions between the force generators (18).

12. Blocking brake according to any one of claims 6 or 8 to 11, characterised in that an annular surrounding hollow space (23) is arranged between the circumference of the brake disc (2) and the hub (15).

**Revendications**

1. Frein de blocage, pouvant être alimenté par un fluide sous pression, pour des éléments de transmission ou des organes de machine (1) tournant autour d'un axe, notamment dans des manipulateurs, constitué par un disque de frein (2) disposé concentriquement par rapport à un axe de rotation, entre deux mâchoires de frein (6, 11; 43, 44) également concentriques, et dont l'un des éléments (2, 10; 43, 44) tourne et dont l'autre élément est relié avec blocage en rotation à un carter fixe (4), et dans lequel les deux mâchoires de frein prennent appui avec possibilité de rotation soit sur l'élément rotatif (1) soit sur le carter fixe (4), mais de manière à pouvoir avoir un déplacement axial par rapport au disque de frein (2), et dans lequel il est prévu d'une part un dispositif de production de force (18) agissant en permanence et maintenant les mâchoires de frein en frottement contre le disque de frein, et d'autre part, entre les mâchoires de frein enserrant le disque de frein, une chambre de pression (16) étroite suivant la direction axiale, pouvant être alimentée suivant la direction radiale par l'intermédiaire d'au moins un perçage (40) d'amenée du fluide sous pression et servant à recevoir le fluide sous pression nécessaire pour le desserrage des mâchoires de frein, laquelle chambre de pression (16) est formée par des âmes radiales (20, 21) des mâchoires de frein, qui sont guidées de façon étanche par rapport à une paroi (8) concentrique par rapport à l'axe de rotation, caractérisé par le fait que

a) les deux mâchoires de frein (10, 11; 43, 44) sont en appui avec possibilité de rotation, avec un jeu minimum (17) déterminant la voie de commutation, contre les parois frontales (6, 7; 41, 42) délimitant axialement les mâchoires sur le côté extérieur,

b) entre chaque paroi frontale (6, 7; 41, 42) et la mâchoire de frein (10, 11; 43, 44) associée se trouve installé un dispositif (18) de production de force, chargeant la mâchoire de frein,

c) la chambre de pression (16) est raccordée à des valves (27) par l'intermédiaire d'au moins deux perçages (40) d'amenée du fluide comprimé, qui sont répartis uniformément sur le pourtour.

2. Frein de blocage suivant la revendication 1, caractérisé par le fait qu'il est prévu comme générateur (18) de force, des paquets de ressorts disposés en étant répartis uniformément et prenant appui contre les parois frontales (6, 7, 41, 42) du carter (4).

3. Frein de blocage suivant la revendication 1, caractérisé par le fait qu'il est prévu comme générateur de force (18), des aimants permanents agissant concentriquement sur les mâchoires de frein.

4. Frein de blocage suivant la revendication 1 ou l'une des suivantes, caractérisé par le fait que la chambre de pression (16) est formée entre des âmes (20, 21), qui font saillie radialement vers l'extérieur au-delà du disque de frein (2), des mâchoires de frein (10, 11).

5. Frein de blocage suivant la revendication 4, caractérisé par le fait que la ligne axiale d'action de force (25) des générateurs de force (18) se situe approximativement en position médiane entre les lignes d'actions de force (du centre de gravité) (24, 26) de la chambre de pression (16) et les éléments de frein (3) du disque de frein (2) et des mâchoires de frein (10, 11).

6. Frein de blocage suivant la revendication 1 ou les suivantes, caractérisé par le fait qu'une mâchoire de frein (11) enserre par un moyeu (15) le disque de frein (2) et que l'autre mâchoire de frein (10) est guidée axialement d'une façon étanche (14) sur le moyeu (15).

7. Disque de frein suivant l'une des revendications 1 à 5, caractérisé par le fait que les deux mâchoires de frein (10, 11) enserrent partiellement le disque de frein (2) et sont guidées axialement d'une façon étanche (34; 32, 33) contre un manchon cylindrique (28, 29) entourant à distance le disque de frein.

8. Frein de blocage suivant la revendication 1 ou les suivantes, caractérisé par le fait que les éléments (20, 21) des mâchoires de frein (10, 11), qui limitent la chambre de pression (16) sur la zone marginale périphérique, sont biseautés (22) ou arrondis.

9. Frein de blocage suivant la revendication 1 ou les suivantes, caractérisé par le fait que dans les faces frontales, tournées l'une vers l'autre, des mâchoires de frein (10, 11, 43, 44) et les parois frontales (6, 7, 41, 42) du carter se trouvent disposées des gorges radiales (31) ainsi que des éléments d'ajustement (30) s'étendant à travers ces gorges et qui possèdent un ajustement glissant par rapport à une gorge respective (31).

10. Frein de blocage suivant la revendication 9, caractérisé par le fait que chaque élément d'ajustement (30) s'étend à partir de la face extérieure de la paroi frontale (6, 7, 41, 42) du carter, à travers cette paroi, est engagé dans la gorge (31) de la mâchoire de frein (10, 11, 43, 44) et est relié rigidement à la paroi (6, 7, 41, 42).

11. Frein de blocage suivant la revendication 9 ou 10, caractérisé par le fait que les organes d'ajustement (30) sont disposés dans les espaces compris entre les générateurs de force (18).

12. Frein de blocage suivant l'une des revendications 6 ou 8 à 11, caractérisé par le fait qu'une cavité périphérique annulaire (23) est ménagée entre le pourtour du disque de frein (2) et le moyeu (15).

Fig. 1

0 053 773

*Fig. 2*

Fig. 3

31

16

4

31

30

30

35

35

10

7

6

11

2

*Fig. 4*

Fig. 5

Fig.6